# EUROPÄISCHE PATENTANMELDUNG

(11) **EP 3 205 620 A1**
(43) Veröffentlichungstag der Anmeldung: **16.08.2017**
(21) Anmeldenummer: 17155286.2
(22) Anmeldetag: 08.02.2017
(51) Int. Cl.: B66F 9/06, B65B 11/04, B66F 9/075, B62B 5/00

(54) **TRANSPORTVORRICHTUNG UND VERWENDUNG**

(30) Priorität: 09.02.2016 DE 102016102230
(71) Anmelder: Pester Pac Automation GmbH, 87787 Wolfertschwenden (DE)
(72) Erfinder: Haug, Hans, 87730 Bad Grönenbach (DE)
(74) Vertreter: Patentanwaltzkanzlei Hutzelmann

(57) **Zusammenfassung**

Transportvorrichtung (1) für Lasten, insbesondere für einen eine Last aufnehmenden Ladungsträger (11), mit einem Antrieb zum Lenken und Fahren, einem Steuergerät und einer Stromversorgung, wobei ein Trägerteil (2) zur Aufnahme der Last vorgesehen ist, wobei wiederum innerhalb des durch das Trägerteil definierten Raumes der Antrieb, Steuergerät und Stromversorgung angeordnet sind, wobei die Transportvorrichtung mindestens zwei voneinander beabstandete Achsen (3, 4) mit jeweils mindestens einem angetriebenen Rad (5) aufweist, wobei die Achsen (3, 4) um eine Hochachse drehbar gelagert sind und wobei die Achsen (3, 4) und Räder (5) derart angeordnet sind, daß die Transportvorrichtung sich bei Bedarf um einen vorgegebenen Punkt zu drehen vermag.

## Beschreibung

Die Erfindung bezieht sich auf eine Transportvorrichtung für Lasten, insbesondere für einen eine Last aufnehmenden Ladungsträger, mit einem Antrieb zum Lenken und Fahren, einem Steuergerät und einer Stromversorgung, wobei ein Trägerteil zur Aufnahme der Last vorgesehen ist, wobei wiederum innerhalb des durch das Trägerteil definierten Raumes der Antrieb, Steuergerät und Stromversorgung angeordnet sind, wobei die Transportvorrichtung mindestens zwei voneinander beabstandete Achsen mit jeweils mindestens einem angetriebenen Rad aufweist, wobei die Achsen jeweils um eine Hochachse drehbar gelagert sind.

Bei der Beladung von Ladungsträgern wie beispielsweise Paletten muss die Ladung gesichert werden. Hierzu werden die beladenen Ladungsträger oftmals mit Stretchfolie oder dergleichen umwickelt.

Hierzu werden bislang die Ladungsträger entweder auf eine Drehscheibe transportiert, mit deren Hilfe sich die Ladungsträger dann drehen und von einer Stretchfolie umwickelt werden, oder die Abwickeleinrichtung der Stretchfolie dreht sich um den beladenen Ladungsträger.

Beide Varianten sind sehr aufwendig. Es muss bei der ersten Variante eine Drehscheibe vorgesehen werden. Zudem muss der jeweilige Ladungsträger zunächst auf der Drehscheibe abgesetzt und dann wieder abtransportiert werden. Dies stellt einen erheblichen Aufwand dar.

Bei der zweiten Variante muss eine Vorrichtung geschaffen werden, welche den Ladungsträger samt Ladung umgreift und um diesen herum bewegt wird. Da sich eine solche Anordnung vergleichsweise schnell drehen muss, um eine akzeptable Umwicklungszeit zu erzielen, müssen auch Maßnahmen zum Momentenausgleich ergriffen werden. Das macht die Vorrichtung sehr aufwendig und damit teuer.

Der vorliegenden Erfindung liegt die Aufgabe zugrunde, eine einfache Möglichkeit zur Umreifung von Ladung und Ladungsträger insbesondere mit Stretchfolie zu schaffen.

Diese Aufgabe wird erfindungsgemäß dadurch gelöst, daß die die Achsen und Räder der Transportvorrichtung derart angeordnet sind, daß die Transportvorrichtung sich bei Bedarf um einen vorgegebenen Punkt zu drehen vermag.

Damit kann die Drehbewegung des Ladungsträgers und der Ladung direkt mit der Transportvorrichtung erzeugt werden. Es sind weder Drehscheibe noch aufwendige Umwicklungsvorrichtungen notwendig.

Sehr vorteilhaft ist es erfindungsgemäß auch, wenn zwei oder mehr Transportvorrichtungen derart miteinander gekoppelt sind, daß diese sich gemeinsam bei Bedarf um einen vorgegebenen Punkt zu drehen vermögen.

Damit kann der Ladungsträger auch bei Einsatz mehrerer Transportvorrichtungen um einen Punkt gedreht werden.

Äußerst vorteilhaft ist es erfindungsgemäß, wenn ein Steuergerät vorgesehen ist, welche zumindest das Drehen der Transportvorrichtung bzw. der Transportvorrichtungen um einen vorgegebenen Punkt zu steuern vermag.

Dadurch kann beispielsweise die vorgegebene Position zum Umwickeln der Ladung und des Ladungsträgers angefahren werden und dann automatisch die Umwicklung vorgenommen werden. Auch andere Funktionen, wie beispielsweise das Fahren an sich können vom Steuergerät übernommen werden.

Eine weitere sehr vorteilhafte Weiterbildung der Erfindung liegt vor, wenn ein Steuergerät vorgesehen ist, welches die Position der Transportvorrichtungen zueinander konstant zu halten vermag.

Damit wird wirkungsvoll ein Kippen der Ladung und des Ladungsträgers verhindert. Zudem lässt sich Ladung sehr einfach aufnehmen.

Gemäß einer weiteren Ausgestaltung der Erfindung ist es sehr vorteilhaft, wenn eine Zuführvorrichtung vorgesehen ist, die als Follenzuführvorrichtung, insbesondere als Folienabwickelvorrichtung ausgebildet sein kann.

Hierdurch wird sichergestellt, daß die Ladung und der Ladungsträger gemäß den Vorgaben umwickelt wird.

Dabei ist es erfindungsgemäß sehr vorteilhaft, wenn eine Spannvorrichtung und/oder eine Schneidevorrichtung vorgesehen ist, die mit der Zuführvorrichtung zusammenwirkt.

Dadurch wird die Folie oder dergleichen unter Spannung gehalten, während sich die Ladung dreht und umwickelt wird. Nach Ende der Umwicklung kann die Folie, meist eine Stretchfolie, abgeschnitten werden.

Eine weitere äußerst vorteilhafte Weiterbildung der Erfindung liegt vor, wenn jeweils mindestens eine Antriebseinheit für jedes angetriebene Rad vorgesehen ist und/oder eine Hubvorrichtung vorgesehen ist, die das Trägerteil und die Last anzuheben vermag, wobei zwischen dem Trägerteil und jeweils einer Achse eine durch von den Rädern durch Verdrehen der Achse um die Hochachse angetriebene Einrichtung zum Heben und Senken des Trägerteils vorgesehen sein kann, wobei hierbei eine Kupplung oder ein wenigstens begrenzt wirkender Freilauf vorgesehen sein kann.

Hierdurch ist die Transportvorrichtung lenkbar. In Verbindung mit dem Steuergerät lässt sich eine autonome oder wenigstens teilautonome Steuerung des Fahrtweges realisieren. Zudem können Lasten selbsttätig aufgenommen werden, wobei durch das Verdrehen der Achsen auch eine große Last angehoben werden kann. Durch ein unabhängiges Arbeiten der einzelnen Achsen kann die Last auch ausnivelliert werden.

Äußerst vorteilhaft ist es gemäß einer weiteren Fortbildung der Erfindung auch, wenn wenigstens eine Sicherheitseinrichtung zur Verhinderung von Kollisionen mit Gegenständen oder Personen vorgesehen ist und/oder wenn eine Ladevorrichtung zur Aufladung der Stromversorgung vorgesehen ist und/oder wenn Sensoren, Aktoren und Kommunikationsmittel vorgesehen sind.

Dadurch lassen sich Unfälle und vor allem Verletzungen von Mitarbeitern verhindern. Es ist auch denkbar, daß die Transporteinrichtung Hindernissen selbsttätig ausweicht. Durch die Ladeeinrichtung wird ein fortwährender Einsatz ermöglicht. So kann beispielsweise bei Stopps die Stromversorgung aufgeladen werden. Durch Sensoren kann die Umgebung erkannt werden. So ist ein quasi autonomer Fahrbetrieb möglich. Durch die Aktoren können Betriebszustände erreicht werden. Mit Hilfe der Kommunikationsmittel kann an eine Zentrale oder andere Transportvorrichtungen Informationen übertragen bzw. von diesen empfangen werden.

Eine erfindungsgemäß sehr vorteilhafte Verwendung der Transportvorrichtung liegt vor, wenn die Transportvorrichtung zum Umwickeln von beladenen Paletten oder Gegenständen oder Zusammenstellungen von Gegenständen mit Folie, Stretchfolie oder anderen Umwickelungsmaterialien vorgesehen ist.

Hierdurch kann auf aufwendige Umwicklungsvorrichtungen verzichtet werden. Zudem entfällt ein mögliches Umladen der Ladungsträger.

Dabei hat es sich als sehr vorteilhaft erwiesen, wenn die Transportvorrichtung für einen Palettierer mit wenigstens einem Palettenplatz, insbesondere für einen Mehrplatz-Palettierer mit wenigstens zwei Palettenplätzen vorgesehen ist, wobei leere und volle Paletten wahlweise längs oder quer an- bzw. abtransportiert werden, wobei entweder eine Transportvorrichtung oder aber für jeden Palettenplatz eine eigene Transportvorrichtung vorgesehen werden kann.

Gerade bei Palettierern mussten bislang erhebliche Maßnahmen zum Schutz von Mitarbeitern getroffen werden. Durch die Verwendung der erfindungsgemäßen Transporteinrichtung können diese Maßnahmen weitgehend eingespart werden, da die Zu- und Abfuhr von Paletten und damit Material bzw. Verpackungen automatisiert erfolgt. Ein Mitarbeiterzugriff ist nicht mehr notwendig.

Auf kleinerem Raum kann eine größere Anzahl von Paletten angeordnet werden, zumal die Zu- und Abfuhr in jeder beliebigen Richtung erfolgen kann. Es ist nicht mehr notwendig, bestimmte Wege einzuhalten.

Im folgenden ist die Erfindung anhand mehrerer Ausführungsbeispiele veranschaulicht.

Dabei zeigen:
- Fig. 1: eine schematische Ansicht einer Transportvorrichtung,
- Fig. 2: eine schematische Palettenanordnung eines Zweiplatz-Palettierers mit einer doppelten Transportvorrichtung, und
- Fig. 3: eine schematische Palettenanordnung einer Umwicklungsvorrichtung mit einer Folienabwickeleinrichtung.

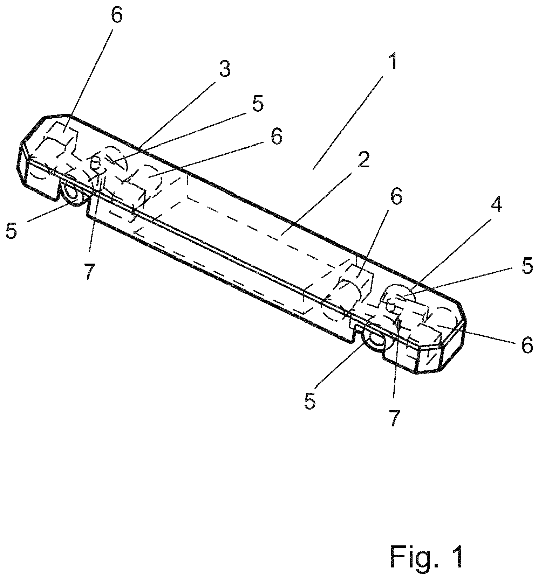

Mit 1 ist in Fig. 1 eine Transportvorrichtung mit einem Trägerteil 2 und zwei Achsen 3 und 4 bezeichnet. Die Achsen 3 und 4 tragen jeweils zwei Räder 5. Die Achsen 3 und 4 sind im Bereich der Enden des Trägerteils 2 angeordnet und sind drehbar um eine vertikale Achse gelagert.

Im Inneren des Trägers ist Raum für eine nicht dargestellte Stromversorgung und einen Steuerungsrechner.

Den Achsen 3 und 4 sind desweiteren noch jeweils zwei Antriebseinheiten 6 zugeordnet, mit denen die Räder 5 angetrieben werden können.

Durch gegenläufigen Antrieb der Räder 5 an einer Achse kann die Achse gedreht werden. Diese Drehung hebt über eine Schraubspindel 7 das Tragteil 2 an bzw. senkt dieses ab. Dabei ist es denkbar, daß eine Kupplung zum Auskuppeln der Schraubspindel 7 oder ein definierter Freilauf vorgesehen ist, um bei Lenkbewegungen der Achsen ein unerwünschtes Verändern der Höhe des Tragteils 2 zu verhindern.

Auch ein Anheben mit Hilfe eines Hydraulikteils oder dergleichen ist denkbar. Ebenso kann die Schraubspindel 7 durch einen separaten Antriebsmotor angetrieben werden, so daß diese von den Rädern 5 und der Achsdrehung unabhängig ist.

An der Transportvorrichtung 1 sind nicht dargestellte Sensoren vorgesehen, welche die Umgebung wenigstens insoweit zu erfassen vermögen, daß Zusammenstöße mit Gegenständen und/oder Personen vermieden werden können.

Es ist denkbar, daß weitere Sensoren, zum Beispiel zur Positionsbestimmung oder dergleichen vorgesehen sind. Ebenso können Aktuatoren für verschiedenste Aufgaben vorgesehen sein.

Eine Kommunikation mit anderen Transportvorrichtungen 1 und/oder einer zentralen Einrichtung ist denkbar.

Eine Ladeeinrichtung für die Stromversorgung ist denkbar, so daß diese bei kurzen Zwischenstopps der Transportvorrichtung 1 nachgeladen werden kann.

Sollen nun Lasten bewegt werden, nachfolgend ist dies am Beispiel von Paletten dargestellt, fahren zwei Transportvorrichtungen 1 unter die Palette 11 ein und heben diese über die Hubvorrichtung, die Spindel 7, an.

Durch Lenkung der Achsen mit Hilfe unterschiedlicher Drehgeschwindigkeiten und/oder Drehrichtungen der Räder einer Achse 3 bzw. 4 wird der Lenkwinkel eingestellt. Die Palette kann weggefahren werden.

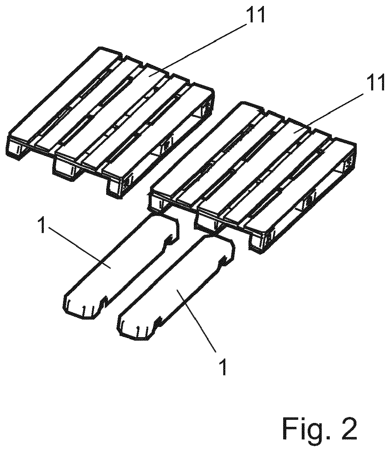

Im vorliegenden, in Fig. 2 dargestellten Ausführungsbeispiel eines Zweiplatz-Palettierers einer Verpackungsmaschine fahren zwei Transportvorrichtungen 1 jeweils unter die aufgestapelte Palette 11 und transportieren diese aus dem Bereich des Palettierers heraus. Ein Bediener braucht nicht in den Bereich des Palettierers hineinzutreten, weswegen keine Sicherheitsmaßnahmen ergriffen werden müssen.

Anschließend, nachdem die Transportvorrichtungen 1 die volle Palette 11 abgestellt haben, wird eine leere Palette an den freien Platz im Palettierer gebracht.

Dies bedeutet eine erhebliche Vereinfachung der Bedienung der Verpackungsmaschine. Der Palettierer kann zudem kompakter gebaut werden, da auch Sicherheitseinrichtungen, wie Kapselungen oder dergleichen völlig verzichtet werden kann.

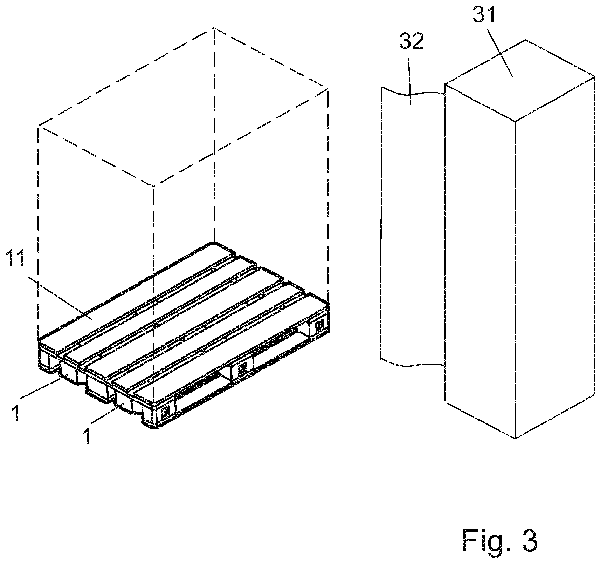

Wie in Fig. 3 dargestellt kann beim Abtransport die jeweilige Palette samt Ladung zur Abwickeleinreichtung 31 gebracht werden. Dort wird ein Ende der in der Abwickeleinrichtung 31 vorgehaltenen Stretchfolie 32 an der Palette 11 oder der Ladung befestigt. Daraufhin werden die Achsen 3 und 4 derart ausgerichtet, daß sich die Palette 11 um ihr Zentrum dreht. Dies wird durch das Steuergerät gesteuert und bestimmt. Sensoren können dabei den Drehvorgang überwachen, so daß auch Optimierungen automatisch vorgenommen werden können. Durch die Drehung wird die Stretchfolie 32 um die Ladung gewickelt. Beim Wickeln wird die Stretchfolie 32 auf Spannung gehalten.

Ist der Umwicklungsvorgang abgeschlossen, wird die Stretchfolie 32 abgeschnitten und das lose Ende der Stretchfolie 32 an der Palette oder der Ladung befestigt.

Das Befestigen der Stretchfolie 32 kann dabei manuell oder automatisch erfolgen.

Nach Ende des Umwicklungsvorganges wird die Palette 11 mitsamt der befestigten Ladung zum vorgesehenen Abstellplatz gebracht.

Aufgrund der geringen Abmessungen der Transportvorrichtungen 1, die auf die Länge und Breite von Standard-Paletten abgestimmt sind und im eingefahrenen Zustand völlig unter diesen verschwinden, werden zu große Unwuchten beim Wickeln vermieden.

Es lassen sich so die Verpackungsprozesse auf höheren Durchsatz hin optimieren. Zudem wird der Platzbedarf geringer, da keine wesentlichen Manövrierflächen mehr gebraucht werden. Der zusätzliche Platzbedarf einer Einheit zum Sichern der Ladung wird ebenfalls vermieden.

Der Einsatz der Transportvorrichtung ist auch bei Einplatz-Palettierern denkbar.

Es ist denkbar, daß die Transportvorrichtung innerhalb und/oder zwischen Verpackungsmaschinen und/oder Palettierern vorgesehen ist.

Gerade innerhalb von Verpackungsmaschinen, ist zur Zu- und Abführung von Material und fertigen Verpackungen eine flexible Transportlösung äußerst vorteilhaft.

Vier- oder Mehrplatzpalettierer mit wenigstens zwei in Reihe hintereinander angeordneten Palettenplätzen können vorgesehen werden, bei denen die einzelnen Paletten mit der Transportvorrichtung zur Verfügung gestellt und wieder abgeholt werden.

So lassen sich die beiden vorderen Paletten seitlich wegfahren, wohingegen die beiden hinteren Paletten direkt nachrücken können. Durch eine solche Anordnung können auch die Wechselzeiten deutlich reduziert werden.

Ein Drei- oder Mehrplatzpalettierer mit wenigstens drei in Reihe hintereinander angeordneten Palettenplätzen ist denkbar, bei dem die einzelnen Paletten mit der Transportvorrichtung einzeln angefahren werden können.

Auch hierdurch kann eine Platz- und Effizienzoptimierung erfolgen.

Ebenso ist ein Palettierer mit quer angeordneten Palettenplätzen denkbar, bei denen die Paletten quer zur Palettenlängsrichtung angeordnet und angefahren werden.

Durch die Möglichkeit, Paletten auch quer zu verfahren ist diese Anordnung erst möglich. Bei entsprechender Ausgestaltung des zu ladenden Gutes kann so auf eine Drehung der Güter verzichtet werden, wodurch die Taktzeiten verkürzt und der Durchsatz erhöht werden können.

Die Transportvorrichtung ist zum Beschicken und Entladen von Palettenmagazinen geeignet, wodurch auch bei Bedarf gestapelte Paletten zur Verfügung gestellt werden können.

## Patentansprüche

1. Transportvorrichtung für Lasten, insbesondere für einen eine Last aufnehmenden Ladungsträger, mit einem Antrieb zum Lenken und Fahren, einem Steuergerät und einer Stromversorgung, wobei ein Trägerteil zur Aufnahme der Last vorgesehen ist, wobei wiederum innerhalb des durch das Trägerteil definierten Raumes der Antrieb, Steuergerät und Stromversorgung angeordnet sind, wobei die Transportvorrichtung mindestens zwei voneinander beabstandete Achsen mit jeweils mindestens einem angetriebenen Rad aufweist, wobei die Achsen jeweils um eine Hochachse drehbar gelagert sind, **dadurch gekennzeichnet, daß** die Achsen und Räder derart angeordnet sind, daß die Transportvorrichtung sich bei Bedarf um einen vorgegebenen Punkt zu drehen vermag.

2. Transportvorrichtung nach Anspruch 1, **dadurch gekennzeichnet, daß** zwei oder mehr Transportvorrichtungen derart miteinander gekoppelt sind, daß diese sich gemeinsam bei Bedarf um einen vorgegebenen Punkt zu drehen vermögen.

3. Transportvorrichtung nach Anspruch 1 oder 2, **dadurch gekennzeichnet, daß** ein Steuergerät vorgesehen ist, welche zumindest das Drehen der Transportvorrichtung bzw. der Transportvorrichtungen um einen vorgegebenen Punkt zu steuern vermag.

4. Transportvorrichtung nach Anspruch 2 oder 3, **dadurch gekennzeichnet, daß** ein Steuergerät vorgesehen ist, welches die Position der Transportvorrichtungen zueinander konstant zu halten vermag.

5. Transportvorrichtung nach einem der vorangehenden Ansprüche, **dadurch gekennzeichnet, daß** eine Zuführvorrichtung vorgesehen ist, die als Folienzuführvorrichtung, insbesondere als Folienabwickelvorrichtung ausgebildet sein kann.

6. Transportvorrichtung nach Anspruch 5, **dadurch gekennzeichnet, daß** eine Spannvorrichtung und/oder eine Schneidevorrichtung vorgesehen ist, die mit der Zuführvorrichtung zusammenwirkt.

7. Transportvorrichtung nach einem der vorangehenden Ansprüche, **dadurch gekennzeichnet, daß** jeweils mindestens eine Antriebseinheit für jedes angetriebene Rad vorgesehen ist und/oder eine Hubvorrichtung vorgesehen ist, die das Trägerteil und die Last anzuheben vermag, wobei zwischen dem Trägerteil und jeweils einer Achse eine durch von den Rädern durch Verdrehen der Achse um die Hochachse angetriebene Einrichtung zum Heben und Senken des Trägerteils vorgesehen sein kann, wobei hierbei eine Kupplung oder ein wenigstens begrenzt wirkender Freilauf vorgesehen sein kann.

8. Transportvorrichtung nach einem der vorangehenden Ansprüche, **dadurch gekennzeichnet, daß** wenigstens eine Sicherheitseinrichtung zur Verhinderung von Kollisionen mit Gegenständen oder Personen vorgesehen ist und/oder daß eine Ladevorrichtung zur Aufladung der Stromversorgung vorgesehen ist und/oder daß Sensoren, Aktoren und Kommunikationsmittel vorgesehen sind.

9. Verwendung einer Transportvorrichtung nach einem der vorangehenden Ansprüche, **dadurch gekennzeichnet, daß** die Transportvorrichtung zum Umwickeln von beladenen Paletten oder Gegenständen oder Zusammenstellungen von Gegenständen mit Folie, Stretchfolie oder anderen Umwickelungsmaterialien vorgesehen ist.

10. Verwendung nach Anspruch 9, **dadurch gekennzeichnet, daß** die Transportvorrichtung für einen Palettierer mit wenigstens einem Palettenplatz, insbesondere für einen Mehrplatz-Palettierer mit wenigstens zwei Palettenplätzen vorgesehen ist, wobei leere und volle Paletten wahlweise längs oder quer an- bzw. abtransportiert werden können, wobei entweder eine Transportvorrichtung oder aber für jeden Palettenplatz eine eigene Transportvorrichtung vorgesehen werden kann.
